# EUROPÄISCHE PATENTSCHRIFT

(11) **EP 2 464 396 B1**
(45) Veröffentlichungstag und Bekanntmachung des Hinweises auf die Patenterteilung: **04.12.2013**
(21) Anmeldenummer: 10754439.7
(22) Anmeldetag: 16.08.2010
(51) Int. Cl.: A61M 1/16, C02F 1/78, A61L 2/20, A61L 2/26, C02F 1/44, C02F 103/02

(54) **ANKOPPLUNGS- UND UMSCHALTEINHEIT FÜR LEiTUNGEN ZUM TRANSPORT VON FLUIDEN**
COUPLING AND SWITCHING ELEMENT FOR LINES FOR TRANSPORTING FLUIDS
UNITÉ D'ACCOUPLEMENT ET DE COMMUTATION POUR CONDUITES DE TRANSPORT DE FLUIDES

(30) Priorität: 14.08.2009 DE 102009026375
(43) Veröffentlichungstag der Anmeldung: 20.06.2012
(73) Patentinhaber: Brensing, Karl August, 53179 Bonn (DE); Dedenbach, Michael, 53179 Bonn (DE)
(72) Erfinder: BRENSING, Karl, August, 53179 Bonn (DE); DEDENBACH, Michael, 53179 Bonn (DE); KLUTH, Rainer, 53179 Bonn (DE)
(74) Vertreter: Fitzner, Uwe
(86) Internationale Anmeldenummer: PCT/EP2010/061907
(87) Internationale Veröffentlichungsnummer: WO 2011/018528

(56) Entgegenhaltungen:
- EP-A1- 2 181 724
- DE-A1- 10 256 584
- DE-A1- 19 520 916
- DE-A1- 19 931 304
- DE-A1-102005 031 334
- DE-U1- 8 805 428
- DE-U1- 29 902 953
- FR-A1- 2 704 150
- US-A- 4 216 185
- US-A- 5 256 371
- US-A- 5 641 456

## Beschreibung

Die vorliegende Erfindung betrifft eine Ankopplungs- und Umschalteinheit vorzugsweise für Stichleitungen zum Anschluss an Ringleitungssysteme zwecks Transport von Fluiden, inbesondere von gashaltigen Fluiden an Endverbraucher (z.B. Dialysegeräte, Zapfstellen von Flüssigkeitsautomaten).

Insbesondere in Systemen, die mit Flüssigkeiten, beispielsweise Wasser beaufschlagt werden, können sich hygienisch bedenkliche Zustände bilden. Zum Beispiel können an Leitungswänden Biofilme entstehen. Hierbei handelt es sich um Lebensgemeinschaften, die mikrobielles Leben eingebettet in einer Matrix aus extrazellulären polymeren Substanzen ermöglichen. Die extrazellulären polymeren Substanzen dienen unter anderem dem äußeren Schutz vor pH-Schwankungen, Salzen, hydraulischer Belastung, toxischen Schwermetallen, Antibiotika und Immunabwehrmechanismen. Die Matrixstruktur führt zu enorm hoher Widerstandsfähigkeit der betreffenden Lebensformen, die aus diesen Gründen teilweise bis tausendfach resistenter gegenüber antimikrobiellen Wirkstoffen sind, als die Einzelorganismen (Gilbert, P., Das, J. und Foley, I. (1997) Biofilmes susceptibility to anti microbiles Adv Dent Res 11(1): 160-167; Costerton, J.W. Stuart, P.S. und Bönberg, E.P. (1999) Bacterial biofilmes a common cause of persistent infections, science 284: 1318-1322).

Studien haben gezeigt, dass ein großer Anteil von Infektionen durch solche Biofilme verursacht wird und diese insbesondere in Krankenhäusern lebensbedrohliche Auswirkungen haben können (Lasa, I., Del Pozo, J.L., Penades, J.R., Leiva, J. (2005) bacterial biofilmes and infection, An. Sist. Sanit. Navar. 28: 163-175). Zu den problematischen Biofilmbakterien zählen insbesondere Pseudomonas aeroginosa, Legionella pneumophila, Acinetobacter, atypische Mykobakterien sowie Serratia. Insbesondere die Pseudomonas-aeroginosa-Infektionen sind auf kontaminiertes Leitungswasser zurückzuführen (Reuter, S., Sigge, A., Reuter, U. u.a. (2002) Endemische Übertragungswege von Pseudomonas aeroginosa, Hyg Mikrobiol 6: 6-12). Daher stellen solche Infektionen insbesondere auf Intensivstationen, Dialysezentren oder operativen Abteilungen ein erhebliches Problem dar.

Ganz besonders bei Dialysen ist die Bildung von Biofilmen ein erhebliches Gefahrenpotenzial. Denn bestimmte Elemente der Wasseraufbereitungsanlagen von Dialyseeinrichtungen, zum Beispiel Filter, Ionenaustauscher oder Membranen fördern die Entwicklung solcher Biofilme. Zusätzliche Faktoren, die die Vermehrung von Bakterien begünstigen sind z. B. Toträume in Wasserleitungssystemen, geringe oder keine Fließgeschwindigkeiten und der Einsatz von Bikarbonatkonzentrat, das zur Herstellung der Dialysierflüssigkeiten verwendet wird.

Zu den geeigneten Desinfektionsmitteln zählt unter anderem Ozon. Dieses Gas hat beispielsweise in der Lebensmittelindustrie, in der Trink- und Abwasseraufbereitung sowie der zahnmedizinischen Behandlung Verwendung gefunden. Entsprechende Anlagen zum Einsatz von Ozon sind beispielsweise in der DE 10061890 A1, DE 1016365 A1, DE 29806719 U1, DE 3225674 A1, DE 202008001211 U1 und der EP 0577475 A1 beschrieben.

Weniger Einsatz hat Ozon in Dialyseeinrichtungen gefunden. Gleichwohl ist aus Brensing u.a. Hyg Med 2009, 34 bekannt, welche Vorteile eine tägliche Ozonierung der Wasserungssysteme von Dialyseeinrichtungen mit sich bringt. Eine verfahrenstechnische und gerätetechnische Lösung wird in diesem Stand der Technik aber nicht vorgestellt. Daher wären Lösungen für den Einsatz von Ozon insbesondere im Dialysebereich äußerst notwendig. Denn die üblicherweise für die Ringleitungssysteme verwendeten Materialien sind nicht thermostabil. Zwar sind PVC-Oberflächen von Vorteil für die Verzögerung der Entstehung von Biofilmen, aber Infolge der mangelnden thermischen Stabilität eine Hitzedesinfektion für Dialyseeinrichtungen nicht geeignet. Sofern thermostabile Leitungen Verwendung finden, sind die Desinfektionsverfahren sehr wasserintensiv und energieaufwendig, es werden bei diesem verfahren mittels Hitze über 80°C erreicht. Ein weiteres Problem ergibt sich bei Notdialysen, welche innerhalb von kurzer Zeit durchzuführen sind. Denn bei der Hitzedesinfektion können Abkühlzeiten von 2 bis 3 Stunden notwendig sein, ehe sicher eine Dialyse erfolgen kann.

Methoden zum Anschluss von Dialysegeräten an Reinstwassersysteme, bei welchen Ablagerungen von Bakterien verhindert werden sollen, sind beispielsweise aus der DE 19931304 A1, DE 102007045113 A1, US 4216185 A, DE 19520916 A1, DE 10262036 A1 und FR 2704150 A1 bekannt. Keine der genannten Schriften behandelt eine Ankopplungs- und Umschalteinheit, welche an alle herkömmliche wasserführende Labile oder Thermostabile Leitungssysteme anbindbar ist.

Die vorliegende Erfindung hat sich nunmehr die Aufgabe gestellt, eine Ankopplungs- und Umschalteinheit zur Verfügung zu stellen, welche an herkömmliche wasserführende Ringleitungssysteme für Reinstwasser oder andere Wasserqualitäten angekoppelt werden kann, um auch hier die modernen Methoden des Gaseintrags, insbesondere der Desinfizierung und Sanitisierung mittels Ozon und anderen Oxydationsmittel von Stichleitungen auch ohne aktive Endverbraucher bzw. Endgeräte (z.B. Hämodialysegeräte, Labor- und Medizingeräte, Abfüllanlagen für Flüssigkeiten) zu ermöglichen.

Gegenstand der Erfindung ist mithin eine variabel steuerbare Ankopplungs- und Umschalteinheit zum Transport von Fluiden, vorzugsweise gashaltigen Fluiden umfassend
- Leitungen (30, 30 a) mit Kopplungsvorrichtungen für die Zufuhrleitung für ein Gas/Flüssigkeitsgemisch,
- Eine Leitung (15), über welche die Verbindung zu einem Endgerät (15 a, 35) erfolgen kann,
- eine abgezweigte Leitung (27), über die das Gas/Flüssigkeitsgemisch zu einem Abfluss geleitet werden kann,
- ein in der abgezweigten Leitung (27) angeordnetes Drosselventil (28) und
- ein zweites in der abgezweigtes Leitung (27) angeordnetes Ventil (31) zwecks Steuerung der Ableitung des Hauptstroms des Gas/Flüssigkeitsgemischs.

Die Ankopplungs- und Umschalteinheit kann z.B. im Falle des Einsatzes für die Ozonisierung in der Ozonisierungsphase zentral oder dezentral automatisch oder manuell eingeschaltet werden. Nach dem Einschaltbefehl wird das Magnetventil aktiviert, das eine bestimmte Flussmenge gashaltigen, z.B. ozonhaltigen Wassers in den Abfluss leitet. Dadurch wird der Zuleitungsschlauch der Dialysemaschine desinfiziert. Der Unterschied besteht darin, dass auch inaktive Geräte (Endverbraucher) und deren Stichleitung desinfiziert werden können. Die zeitliche Steuerung der Stichleitungssysteme findet in Koordination mit der Beaufschlagung, beispielsweise Ozonisierung des Ringleitungssystems (äußere Desinfektion) statt. Dieses Gerät kann mithin in jede Altanlage integriert werden, ohne diese aufzutrennen oder umzubauen. Es ist mithin nicht nur für die vorliegende Vorrichtung, sondern auch für Fremdanlagen geeignet. Vorzugsweise ist die Anlage demgemäß für Drucke von 1 bis 15 bar, besonders bevorzugt von 2 bis 10 bar, höchst bevorzugt von 2 bis 6 bar ausgelegt.

Die erfindungsgemäße Einheit ist vorzugsweise für Systeme geeignet, bei denen mit hohen Drucken gearbeitet wird. So ist die Zuführleitung vorzugsweise für Drucke von 2 bis 6 bar ausgelegt. Möglich sind aber auch höhere Drucke. Ebenso ist die erfindungsgemäße Einheit für drucklose Zustände (atmosphärischen Druck) geeignet.

Zur Messung und Regelung des Durchflusses sind optional Durchflussmessgeräte in dem System angeordnet. Hierbei kann es sich um alle üblichen dem Fachmann bekannten Systeme handeln. Beispiele sind Turbinenmessgeräte oder kalorimetrische Messgeräte.

In der Zuführ- und Abführleitung können Venturidüsen eingesetzt werden. Dies ist vorteilhaft, wenn Flüssigkeiten oder Gase oder sonstige Chemikalien eingebracht werden sollen. Der Einbau der Venturidüsen bietet den Vorteil, dass eine Rückkontamination der Verbindungen bei normalem Betrieb des Endgerätes, z.B. während der Hämodialyse, vermieden wird. Dies ist jedoch für die erfindungsgemäße Vorrichtung nicht unbedingt erforderlich, d.h. das System kann mit hohen Fließgeschwindigkeiten oder auch mit geringen Fließgeschwindigkeiten arbeiten.

In einer bevorzugten Ausführungsform handelt es sich um eine kompakte, Potentiell Mobile und Variable transportfähige Ankopplungs- und Umschalteinheit. Diese dient der Verbindung einer Leitung, z.B. einer Dialyseringleitung mit einem Endverbraucher, z.B. einem Dialysegerät. Die Ankkopplungs- und Umschalteinheit weist eine Leitung auf, welche an eine Flüssigkeitsleitung z.B. eine Dialyseringleitung ankoppelbar ist. In diese ankoppelbare Leitung ist der erfindungsgemäßen Vorrichtung ist vorzugsweise ein Strömungsrohr integriert. In einer bevorzugten Ausführungsform ist eine Eintragseinheit für die Zufuhr von Oxidationsmitteln oder Desinfektionsmitteln angeschlossen, die vorzugsweise gasförmig sind. Vorzugsweise kann es sich um eine Ozonerzeugungseinheit handeln, welche in einer Variante der Erfindung in einer speziellen Anlage erzeugt werden kann.

Der Eintragseinheit für die Oxidations- oder Desinfektionsmittel nachgeordnet ist eine Leitung, über welche die Verbindung zum Endverbrauchergerät erfolgen kann. Im Bereich der Anschlussstelle für den Endverbraucher ist ein Drosselventil angeordnet, über welches der Abfluss des Flüssigkeitsvolumens gesteuert werden kann. Das Ventil ist vorzugsweise am Anfang einer abgezweigten Leitung angeordnet, welche zu einem Abfluss führt, über welchen die Flüssigkeit aus der erfindungsgemäßen Einheit abfließen kann.

Die erfindungsgemäße Ankopplungs- und Umschalteinheit enthält ferner eine Verbindungsleitung zwischen Endverbrauchergerät und Abfluss. Über diese Leitung kann demgemäß auch der Flüssigkeitsabfluss aus dem Endverbrauchergerät erfolgen.

Die erfindungsgemäße Anlage weist den Vorteil auf, dass auch bei einem inaktiven Endverbrauchergerät, z.B. einem Hämodialysegerät, eine Behandlung bis zum Anschlussstück zum Endverbraucher erfolgen kann. Auf der anderen Seite ist in der abgezweigten Leitung zum Abfluss aus dem aktiven Endverbraucher erfolgen zusätzlich zum Drosselventil, welches vorzugsweise am Anfang der abgezweigten Leitung angeordnet ist, ein zweites Ventil vorgesehen, welches komplett blockierbar ist. Während der Blockierung kann der Endverbraucher arbeiten, z. B. mit dem Endverbraucher einer Hämodialyse durchgeführt werden.

In der erfindungsgemäßen Vorrichtung wird demgemäß vorzugsweise ein Flüssigkeitsstrom aus einer Leitung, vorzugsweise einer Dialyseringleitung im Falle der Durchführung von Dialysen, zu einem Anschluss eines Endverbrauchers, im Falle der Durchführung einer Dialyse eines HD-Gerätes, geführt. Über ein Ventil kann ein ggf. gedrosselter Flüssigkeitsstrom über eine abgezweigte Leitung zu einem Abfluss geführt werden. Die abgezweigte Leitung kann mittels eines weiteren Ventils aber auch blockiert werden. Ferner kann über die erfindungsgemäße Einheit durch eine weitere Anschlussleitung ein Abfluss der Flüssigkeit aus dem Endverbraucher über die erfindungsgemäße Ankopplungs- und Umschalteinheit erfolgen.

Die erfindungsgemäße Einheit ist insbesondere überall dort einsetzbar, wo Gas/Flüssigkeitssysteme, insbesondere Gas-Wasser-Systeme zum Einsatz kommen sollen, insbesondere wenn längere Stillstandzeiten der Flüssigkeitsströme vermieden werden sollen. Insbesondere handelt es sich um solche Systeme, die Oxidationsmittel, vorzugsweise gasförmige Oxidationsmittel (z.B. Ozon) verwenden. In Betracht kommen aber auch andere oxidierende Desinfektionsmittel wie z.B. Natriumhypochlorit, Calziumhypochlorit, Chlor, elektrolytisch hergestellte Chlorverbindungen, Chlordioxidlösungen, Wasserstoffperoxid, Lösungen auf Basis von Peressigsäure.

Die erfindungsgemäße Einheit ist daher ganz besonders bevorzugt zum Einsatz von Anlagen geeignet, bei denen Desinfektionen und Sanitisierungen durchgeführt werden sollen. Mithin ist die erfindungsgemäße Einheit vor allem für die Desinfektion von Dialysesystemen einsetzbar. Darüber hinaus kann die Anwendung auch in weiteren Bereichen der Medizin- und Labortechnik und der Trinkwasseraufbereitung sowie der Konservierung von Flüssigkeiten Verwendung finden. Der Einsatz in Getränke- und Getränkeautomaten sowie der Fisch- und Nutztierhaltung ist ebenfalls denkbar. Weitere Anwendungsgebiete sind beispielsweise die Warmwasser-, Heiz- und Klimatechnik, sowie in der Prozess- und Abwasser-Aufbereitung. Die erfindungsgemäße Einheit bietet hier den Vorteil, dass sie an herkömmliche Systeme anschließbar ist und nicht für eine neue Anlage Investitionen getätigt werden müssen.

Eine vorzugsweise einsetzbare Anlage weist einen inneren Fluidkreislauf (innere Desinfektion) mit einer Vorrichtung zur Zufuhr von Oxydationsmitteln und einen äußeren Fluidkreislauf (äußere Desinfektion) auf, der derart ausgestaltet ist, dass er von dem inneren Kreislauf entweder getrennt, oder mit diesem verbunden betrieben werden kann. Der Eintrag des Oxidationsmittel kann mit der erfindungsgemäßen Vorrichtung erreicht werden werden. Durch die Anordnung des Drosselventils mit einer Abzweigungsleitung für das Gas-/Flüssigkeitsgemisch wird erreicht, dass selbst bei einem inaktiven Endverbraucher, z.B. einem HD-Gerät die Desinfektion und Sanitisierung der Stichleitung durchgeführt werden kann.

In der erfindungsgemäß besonders bevorzugten Ausführungsform wird eine Verbindung zwischen den Ringleitungssystemen des Reinstwassers und den Dialysegeräten hergestellt. Dadurch können auch herkömmliche und bestehende Ring- und Stichleitungssysteme mit einer Ozontechnologie im Sinne einer Kaltdesinfektion versehen werden.

Erfindungsgemäß besonders bevorzugt ist jedoch der Einsatz in Kombination mit einer Oxydationsmittelerzeugungsanlage, insbesondere eine Anlage zur Erzeugung von Ozon. Eine solche Anlage kann vor allem in Dialyseeinrichtungen Verwendung finden.

Die erfindungsgemäße Ankopplungs- und Umschalteinheit ist aber auch so auslegbar, dass sie eine Anschlussvorrichtung enthält für die Desinfektion von geeigneten Behältnissen, von diversen wassertechnischen Komponenten (z.B. Filter) und von Endverbrauchern vorzugsweise mittels gasförmiger Oxidationsmittel (z.B. Ozon).

Grundsätzlich kann das Ozon aus Sauerstoff unter Hinzufügung von Energie durch sog. Stille elektrische Entladungen hergestellt werden. Die Ozonbildung findet hierbei durch Rekombination eines Sauerstoffmoleküls mit einem Sauerstoffatom statt. Es muss also eine Spaltung eines Sauerstoffmoleküls durch elektrische Energie erfolgen. Dies wird in einem Gasraum zwischen zwei Elektroden erreicht, die durch ein Dielektrikum getrennt sind. An den Elektroden werden Wechselstrom und ein Hochspannungsfeld angelegt. Meistens sind die Ozonerzeugungseinheiten als Glas- oder Keramikröhren in Edelstahlröhren positioniert, so dass ein möglichst enger ringförmiger Entladungsspalt entsteht. Eine entsprechende Anzahl dieser Ozonerzeugungsmodule kann dann für die Produktion von Ozonmengen von wenigen Gramm/Stunde bis vielen Kilogramm/Stunde verwendet werden. Als Betriebsgas werden entweder Sauerstoff oder Luft eingesetzt.

Ebenso ist aber auch möglich, unter Einsatz von UV-Licht aus dem Betriebsgas (Sauerstoff oder Luft) Ozon zu erzeugen, d.h. die elektrische Spaltung von Sauerstoff kann auch durch Strahlungsenergie erfolgen. Hierfür verwendet man vorzugsweise UV-Lampen mit Strahlungswellenlängen von etwa 185 nm. Bei dieser Wellenlänge absorbiert molekularer Sauerstoff Energie und wird in Atome gespalten. Die Rekombination der Atome führt dann zum Ozonmolekül. Die UV-Ozon-Erzeuger bestehen gewöhnlich aus einem Bestrahlungsreaktor mit eingebauter Lampe, an der das sauerstoffhaltige Betriebsgas vorbeiströmt und in Ozon umgewandelt wird. Diese Geräte sind vorzugsweise für kleine Ozonmengen von wenigen Gramm/Stunde einsetzbar.

Eine Alternative ist die Herstellung aus Flüssigkeit, die Sauerstoff enthält, insbesondere aus Wasser. Hier wird unter Einsatz von Energie, zum Beispiel elektrischer Energie, das Ozon hergestellt. Hierbei wird mittels einer elektrolytischen Wasserspaltung Ozon aus dem Sauerstoff des Wassermoleküls erzeugt. In einer Durchflusszelle befinden sich spezielle Elektroden (z.B. Anode mit Feststoffelektrolyt und Kathode) die vom Wasser umströmt werden. Eine Gleichspannungsquelle erzeugt den erforderlichen Elektrolysestrom, der zur Ozon-Gas-Erzeugung an der Anode führt. Das betreffende Verfahren ist in erster Linie für kleine Ozonmengen von wenigen Gramm/Stunde einsetzbar.

Zur Desinfektion wird das erzeugte oder hinzugefügte Oxidationsmittel vorzugsweise in gasförmiger Form in einen Fluidkreislauf eingegeben, z.B. mittels eines (Venturi)-Injektors. Vorzugsweise in Form eines Flüssigkeits/Gasgemisches wird mittels einer Kreislaufpumpe das Oxidationsmittel solange im Kreis gefahren, bis über eine einstellbare Zeit eine vorgegebene Konzentration konstant gehalten wird. Vorzugsweise wird das Ozon/Wassergemisch über einen statischen Mischer geleitet. Vorzugsweise werden als Standardverfahren zur Messung des im Wasser gelösten Ozons amperiometrische Sensoren eingesetzt. Diese Geräte verfügen über einen Messkopf mit einem entsprechenden Elektroden/Elektrolyt-System, das entweder offen oder membran bedeckt ist. Das Messsystem wird mit einer Durchflusszelle mit dem zu messenden Wasser in Kontakt gebracht. Ozon reagiert an der Arbeitselektrode (Kathode) und erzeugt einen zur Konzentration proportionalen Strom. Mittels eines Messumformers wird das Stromsignal in eine Konzentrationseinheit (z.B. Milligramm/Liter) umgewandelt. Von Vorteil ist eine regelmäßige Kalibrierung gegen ein photometrisches Messverfahren (z.B. Indigo-TriSulfonat).

Erforderlichenfalls kann eine Vernichtung des Ozon erfolgen, d.h. die Abluft kann über einen Ozonvernichter, z.B. eine Kohlepatrone abgeführt oder wahlweise zurückgeführt werden. Das im Wasser gelöste Ozon lässt sich beispielsweise durch Bestrahlung mit UV-Licht zu Sauerstoff wieder abbauen. Dafür leitet man das Wasser durch einen UV-Reaktor mit Quarzrohr und bestrahltes Medium mit UV-Licht, vorzugsweise der Wellenlänge 254 nm. Bei dieser Wellenlänge hat das Ozonmolekül ein Absorptionsmaximum und zerfällt zu Sauerstoff.

Alternativ lässt sich das Ozon sowohl im Wasser als auch in der Gasphase durch die heterogene Katalyse an Aktivkohle oder Mischoxidgranulat abbauen. Beide Materialien werden in Patronen oder Reaktoren verwendet.

Die beschriebene Ankopplungs- und Umschalteinrichtung weist gegenüber dem Stand der Technik erhebliche Vorteile auf. Sie ist als kompakte Zentraleinheit für jede Anlage anpassbar und für eine Kaltdesinfektion des Reinstwassersystems anwendbar. Die Ankopplungs- und Umschaltvorrichtung ermöglicht eine totraumfreie Komplettdesinfektion und Sanitisierung der Ringleitungssysteme und der Stichleitungen ohne aktive Endverbraucher. Die Desinfektion ist hoch effektiv und kostengünstig, da kein Ring- oder Übergabe-Modulumbau nötig ist und nahezu keine oder nur geringe Folgekosten im Vergleich zur Heißdesinfektion entstehen. Ferner wird die Biofilmbildung völlig bzw. weitgehend verhindert und es bleiben keine chemischen Rückstände zurück. Das Ozon zerfällt zu ungiftigem Sauerstoff. Andererseits sind schon geringste Ozonkonzentrationen mikrobiologisch hochwirksam.

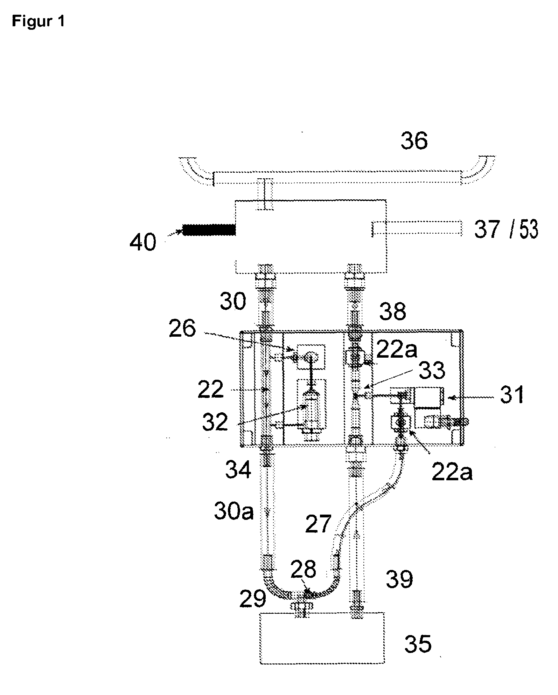

Im Folgenden wird die Erfindung anhand der Figuren 1-3 näher erläutert:

Die Figur 1 stellt ein Beispiel einer Ankopplungs- und Umschalteinheit dar. Diese verbindet die Dialyseringleitung 36 und einen Endverbraucher 35 z.B. ein Hämodialysegerät (= HD-Gerät) miteinander. Der aus der Dialyseringleitung 36 kommende Flüssigkeitsstrom wird über die Leitungen 30 und 30a zum Anschluß 29 bis kurz vor den Endverbraucher (z.B. HD-Gerät) 35 geführt. Das Magnetventil 31 erlaubt nach entsprechender Ansteuerung den Abfluss des kompletten Flüssigkeitsvolumens aus der Leitung 30a gedrosselt über das Ventil 28 und über die abgezweigte Leitung 27 in den Standardabfluss 37, der für den normalen Betrieb des Endverbrauchers (z.B. HD-Gerätes) via Leitungen 39 und 38 vorgesehen ist. Üblicherweise findet die Desinfektion mittels der Gas/Flüssigkeitsperfusion der Stichleitung zum Endverbraucher 35 (z.B. HD-Gerät) über die Leitungen 30 und 30a bis zum Anschlussstück 29 bei einem inaktiven Endverbraucher 35 (z.B. HD-Gerät) außerhalb der Behandlungszeiten statt. Bei normalem Hämodialysebetrieb während der Patientenbehandlung ist der Flüssigkeitsstrom über die abgezweigte Leitung 27 durch das Magnetventil 31 komplett blockiert. Der Flüssigkeits-Abfluss aus dem Endverbraucher (z.B. Dialysat aus HD-Gerät) 35 findet über die Leitungen 39 und 38 zur Standardabflussleitung 37 statt.

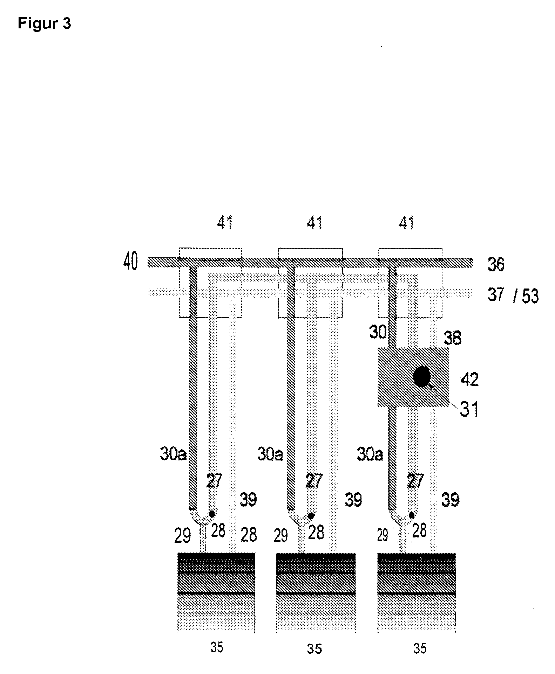

In der beispielhaft dargestellten Vorrichtung herrscht In der Ringleitung 36 und am Anfang 30 der Leitung 30a ein Druck von 2 bis 6 bar. Über den Anschluss 40 kann über eine Ankopplungs- und Umschalteinheit auch die Stichleitungsperfusion von mehreren inaktiven Endverbrauchern 35 (z.B. HD-Geräten) betrieben werden (cf. Fig. 3). Das desinfizierende Gas/Flüssigkeitsgemisch (z.B. Ozon/Reinstwasser) kann je nach Bedarf über die Ringleitung 36 in die Stichleitung eingebracht werden, über den Anschluß 40 zugeführt werden oder mittels einer Gaseintragseinheit 32 über eine Pumpe 26 in ein zwischengeschaltetes Strömungsrohr 22 lokal eingebracht werden. Bei Bedarf kann der Flüssigkeitsstrom alternativ zum Standardabfluß 37 auch in einen separaten Auffangbehälter 53 eingeleitet werden.

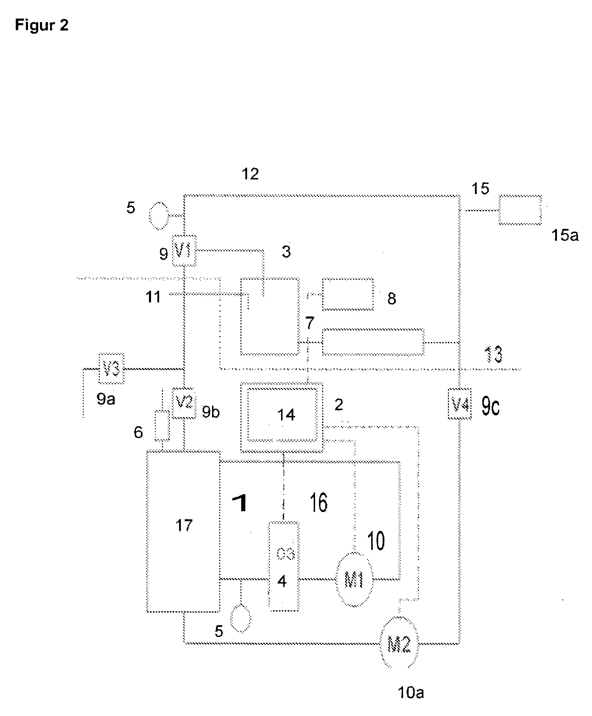

Die Figur 2 stellt das Beispiel einer Desinfektion der Ringleitung und von Stichleitungen einer Dialyseeinrichtung dar: Die Endverbraucher 15a der Dialyseeinrichtung sind über die Stichleitung 15 mit der Ringleitung (13 Vorlauf und 12 Rücklauf) verbunden. Über die Start-Stopp-Eingabe kann die Umkehrosmosesteuerung 8 ein- oder ausgeschaltet werden. Das aus dem Ozonerzeugungs- und -eintragssystem 4 kommende Ozon- /Wassergemisch wird in den Arbeitsbehälter 17 gegeben. Der Ozonerzeuger ist saugseitig der Kreislaufpumpe 10 vorgeschaltet. Die Steuerung erfolgt mittels der Vorrichtung 2, welche in dem Beispiel einen Touchscreen 14 aufweist. Die Ozonkonzentration kann über die Vorrichtung 5 im inneren Kreislauf 1 und im äusserem Kreislauf 3 gemessen werden. Durch die Kreislaufpumpe 10 wird das Ozon im inneren Kreislauf geführt und das Wasser mit Ozon angereichert. Hierdurch wird der Arbeitsbehälter 17 einer Desinfektion unterworfen. Das überschüssige Ozon kann über die Entgasungseinrichtung 6 abgeführt.

Bei der inneren Desinfektion wird die Ozonkonzentration von mindestens 30 ppb im Arbeitsbehälter 17 für circa 10 bis 15 Minuten konstant gehalten. Nachdem die Desinfektion im inneren Kreislauf abgeschlossen ist, kann der äußere Kreislauf 3 angekoppelt werden. Es handelt sich hier um die komplette Dialyseringleitungen 13 und 12, sowie der über die Stichleitungen 15 angekoppelten Endverbraucher(n) 15a. Nach dem Erreichen einer parametrierbaren Ozonkonzentration, mindestens 30 ppb, beginnt die einstellbare Reaktionszeit. Die Ozonkonzentraion im äusseren Kreislauf 3 und im inneren Kreislauf 1 wird dabei über die Ozonmesseinrichtung 5 gemessen und protokolliert.
Nach Beendigung der Desinfektion wird das System mit dem Permeat der Umkehrosmose über das Ventil V3 (9a) ausgespült. Dabei wird die Ozonkonzentration im Rücklauf der Ringleitung 12 gemessen. Nach einer einstellbaren Spülzeit bei der die Leitung mit einem Vielfachen ihres Inhalts ausgespült wurde und die Ozonkonzentration im Rücklauf 12 des Rings kleiner 10 ppb liegt wird die Spülung beendet und die Anlage wieder für die Dialyse freigegeben.
Im Falle einer Notdialyse bricht die Desinfektion ab und die Anlage wird wie beschrieben gespült.

Die Figur 3 stellt das Beispiel einer Parallelschaltung dar, bei der mehrere Stichleitungen (im Beispiel 3) zu Endverbrauchern 35 (z.B. HD-Geräten) mittels einer Umschalteinheit gezielt perfundiert und desinfiziert werden können. Dies ist als eine Art "Cluster-Betrieb" zu verstehen, bei dem auch Gruppen von Endverbrauchern die Stichleitungsperfusion mittels einer Umschalteinheit erhalten können. Der Eintrag des desinfizierenden Gas/Flüssigkeitsgemisches findet über die Zufuhr 40 statt und mittels der Umschalteinheit 42 mit dem Ventil 31 findet nach Perfusion der Stichleitungen (30a, 30) die Ableitung des Flüssigkeitsstroms via 38 vorzugsweise in den Standardabfluß 37 der Dialyseeinrichtung (z.B. für Dialysat der HD-Geräte) statt. Hierzu sind die abgezweigten Leitungen 27 mit dem Drosselventil 28 parallel geschaltet und die Endverbraucher inaktiv. Bei Normalbetrieb der Endverbraucher 35 ist das Ventil 31 verschlossen und das Abwasser fließt über die Leitungen 39 jeweils in den Standardabfluß 37. Alternativ kann die Ableitung des Flüssigkeitsstroms nach Bedarf auch jeweils in einen separaten Auffangbehälter 53 eingeleitet werden.

### Bezugszeichenliste

- 1: Innerer Kreislauf
- 2: Steuervorrichtung
- 3: Äußerer Kreislauf
- 4: Ozonerzeugungs-und eintragsvorrichtung
- 5: Ozonmessvorrichtung
- 6: Entgasungseinrichtung
- 7: Verbindungsleitung zur Umkehrosmosesteuerung
- 8: Umkehrosmosesteuerung
- 9: Umschaltventil Dialysering / Desinfektionen
- 9a: Kanalventil
- 9b: Befüllventil
- 10: Kreislaufpumpe (innerer Kreislauf)
- 10a: Druckerhöhungspumpe (äußerer Kreislauf)
- 11: Weichwassernachspeisung für Umkehrosmose
- 12: Rücklauf
- 13: Vorlauf
- 14: Touchscreen
- 15: Stichleitung(en)
- 15 a: Endverbraucher
- 16: Anbindung Ozonerzeugungsvorrichtung 4 an Steuerung 2
- 17: Arbeitsbehälter
- 18: Leitung für zu ozonisierendes Wasser
- 19: Leitung für das Ansaugen von Flüssigkeit zum Ozoneintrag
- 19 a: Fluss-, Temperatur-, Gasblasen-Steuer-und Regeleinrichtung
- 20: Rückführleitung
- 20 a: Fluss-, Temperatur-, Gasblasen-Steuer-und Regeleinrichtung
- 21: Ausfluss
- 22: Strömungsrohr
- 22 a: Fluss-, Temperatur-, Gasblasen-Steuer-und Regeleinrichtung
- 23: Abfluss
- 24: Ventil
- 25: Ozonisierungskammer
- 25 a, 25 b, 25 c: Weitere Ozonisierungskammern
- 25 d: Kegelförmige Düse
- 26: Pumpe
- 27: Abgezweigte Leitung
- 28: Drosselventil
- 29: Anschlussstück an Endverbraucher mit internem Ventil
- 30: Leitungsanfang der Leitung 30 a
- 30 a: Leitung zum Endverbraucher
- 31: Ventil
- 32: Ozontechnologie
- 33: Venturidüse
- 34: Ankopplungseinheit an Ozontechnologie
- 35: Endverbraucher (zB. HD-Gerät, Dialysator-Spülgerät, Mischtank zur Konzentratherstellung, Sterilisator)
- 36: Ringleitung
- 37: Standardabfluss
- 38: Abflussleitung
- 39: Abfluss aus dem HD-Gerät
- 40: Anschlussleitung Paralellbetrieb und Zufuhr des Desinfektionsmittels als Gas/Flüssigkeitsgemisch
- 41: Anschlusspult für Endverbraucher
- 42: Ankopplungs- und Umschalteinheit
- 43: Batchbehälter
- 44: Zirkulationspumpe
- 45: Produktionspumpe
- 46: Getränkemaschine
- 47: Ventilblock 1
- 48: Ventilblock 2
- 49: Entnahmestelle
- 50: Ablauf
- 51: Getränkeaufbereitungseinheit
- 52: Zulauf
- 53: Auffangbehälter

## Patentansprüche

1. Ankopplungs- und Umschalteinheit zum Transport von gashaltigen Fluiden, umfassend
- Leitungen (30, 30 a) mit Kopplungsvorrichtungen für die Zufuhrleitung für ein Gas/Flüssigkeitsgemisch,
- Eine Leitung (15), über welche die Verbindung zu einem Endgerät (15 a, 35) erfolgen kann,
- eine abgezweigte Leitung (27), über die das Gas/Flüssigkeitsgemisch zu einem Abfluss geleitet werden kann,
- ein in der abgezweigten Leitung (27) angeordnetes Drosselventil (28) und
- ein zweites in der abgezweigtes Leitung (27) angeordnetes Ventil (31) zwecks Steuerung der Ableitung des Hauptstroms des Gas/Flüssigkeitsgemischs.

2. Ankopplungs- und Umschalteinheit nach Anspruch 1 **dadurch gekennzeichnet, dass** die Ableitung des Hauptstroms über eine Venturidüse (33) in den Standardabfluß (37) oder in einen Auffangbehälter (53) erfolgt.

3. Ankopplungs- und Umschalteinheit nach Anspruch 1, **dadurch gekennzeichnet, dass** sie konstruktiv derart gestaltet ist, dass das Arbeiten bei Anfangsdrucken von 1 bis 15 bar ermöglicht wird.

4. Ankopplungs- und Umschalteinheit nach Anspruch 3 **dadurch gekennzeichnet, dass** sie für Anfangsdrucke von 2 bis 15 bar ausgelegt ist.

5. Ankopplungs- und Umschalteinheit nach einem der vorhergehenden Ansprüche **dadurch gekennzeichnet, dass** sie in der Hauptleitung (30, 30a) und in der Abzweigungsleitung (27, 38) bis zum Standardabfluß 37 oder bis zu einem Auffangbehälter 53 Durchflussmessgeräte zum Messen, Steuern und Regeln des Gesamtprozesses enthält.

6. Ankopplungs- und Umschalteinheit nach einem der vorhergehenden Ansprüche **dadurch gekennzeichnet, dass** sie für den Einsatz von Gas/Wasser-Gemischen ausgelegt ist.

7. Ankopplungs- und Umschalteinheit nach einem der vorhergehenden Ansprüche **dadurch gekennzeichnet, dass** sie für den Einsatz zur Desinfektion und Sanitisierung mittels Oxidationsmitteln ausgelegt ist.

8. Ankopplungs- und Umschalteinheit nach einem der vorhergehenden Ansprüche **dadurch gekennzeichnet, dass** sie für den Einsatz von gasförmigen Oxidationsmitteln ausgelegt ist.

9. Ankopplungs- und Umschalteinheit nach einem der vorhergehenden Ansprüche **dadurch gekennzeichnet, dass** sie für den Einsatz von Ozon ausgelegt ist.

10. Ankopplungs- und Umschalteinheit nach einem der vorhergehenden Ansprüche **dadurch gekennzeichnet, dass** sie für den Anschluss einer Gaseintrags- bzw. Ozonisierungseinheit (32, 26) ausgelegt ist.

11. Ankopplungs- und Umschalteinheit nach einem der vorhergehenden Ansprüche **dadurch gekennzeichnet, dass** in der Zuführleitung (30 nach 30a) ein Strömungsrohr (22) zum Einbringen, Vermischen und Konzentrieren der gasförmigen Bestandteile angeordnet werden kann.

12. Ankopplungs- und Umschalteinheit nach einem der vorhergehenden Ansprüche **dadurch gekennzeichnet, dass** sie eine Anschlussvorrichtung (29) enthält für die Desinfektion von geeigneten Behältnissen, von diversen wassertechnischen Komponenten (z.B. Filter) und von Endverbrauchern (35) vorzugsweise mittels gasförmiger Oxidationsmittel (z.B. Ozon).

## Claims

1. Coupling and switchover unit for the transportation of fluids containing gas, comprising
- lines (30,30 a) with a coupling mechanism for the supply line of a gas/liquid composite,
- a line (15) by means of which the connection to a terminal device (15 a, 35) can take place,
- a branched-off line (27) by means of which the gas/liquid composite can be led to a drain,
- a restriction valve (28) disposed in the branched-off line (27) and
- a second valve (31) disposed in the branched-off line (27) to control the discharge of the principal current of the gas/liquid composite.

2. The coupling and switchover unit according to Claim 1, **characterized in that** the discharge of the principal current takes place by means of a Venturi nozzle (33) into the standard discharge (37) or into a collecting vessel (53).

3. The coupling and switchover unit according to Claim 1, **characterized in that** the discharge is constructed in such a way that the operating of the initial pressures is possible at 1 to 15 bar.

4. The coupling and switchover unit according to Claim 3, **characterized in that** it is constructed for initial pressures of 2 to 15 bar.

5. The coupling and switchover unit according to any of the preceding claims, **characterized in that** it contains flow meter devices in the principal line (30, 30 a) and in the branched-off line (27,38) until the standard drain (37) or until a collecting vessel (53), for metering, controlling and regulating of the overall process.

6. The coupling and switchover unit according to any of the preceding claims, **characterized in that** it is constructed for the use of gas/water composites.

7. The coupling and switchover unit according to any of the preceding claims, **characterized in that** it is designed for the disinfection and sanitization by means of oxidizing agents.

8. The coupling and switchover unit according to any of the preceding claims, **characterized in that** it is designed for the use of gaseous oxidizing agents.

9. The coupling and switchover unit according to any of the preceding claims, **characterized in that** it is designed for the use of ozone.

10. The coupling and switchover unit according to any of the preceding claims, **characterized in that** it is designed for the connection of a gas entry unit or a ozonization unit.

11. The coupling and switchover unit according to any of the preceding claims, **characterized in that** in the supply line (30 after 30 a) a flow tube (22) for the insertion, mixing and concentration of the gaseous composites can be arranged.

12. The coupling and switchover unit according to any of the preceding claims, **characterized in that** it contains a connection device (29) for the disinfection of suitable vessels, of diverse hydro-technical components (filters for example) and of final users (35), preferably by means of gaseous oxidizing agents (ozone for example).

## Revendications

1. Dispositif d'accrochage et de commutation pour le transport des fluides gazeux, comprenant
- des circuits (30,30a) avec des dispositifs de couplage pour le fil d'apport pour un mélange gazeux et liquide,
- un circuit (15) par lequel la connexion à une borne terminale (15 a, 35) peut s 'effectuer,
- un circuit branché (27) par lequel le mélange gazeux et liquide peut être amendé à un dispositif de drainage,
- une soupape d'étranglement (28) disposée dans le circuit branché (27) et
- une deuxième valve (31) disposée dans le circuit branché (27) pour contrôler la dérivée du courant principal du mélange gazeux et liquide.

2. Dispositif d'accrochage et de commutation selon la revendication 1 **caractérisée en ce que** la dérivée du courant principal s'effectue par une buse Venturi (33) dans le dispositif standard de drainage (37) ou dans un réservoir collecteur (53),

3. Dispositif d'accrochage et de commutation selon la revendication 1 **caractérisée en ce que** la dérivée est construite de telle sorte que l'opération des pressions initiales soit possible de 1 à 15 bar.

4. Dispositif d'accrochage et de commutation selon la revendication 3 **caractérisée en ce qu'**il est dimensionné pour des pressions initiales de 2 à 15 bar.

5. Dispositif d'accrochage et de commutation selon l'une des revendications précédentes **caractérisée en ce qu'**il contient des débimètres dans le circuit principal (30, 30 a) et dans le circuit branché (27,38) jusque ' au dispositif de drainage standard (37) ou jusque' à un réservoir collecteur pour mesurer, contrôler et régler le processus entier.

6. Dispositif d'accrochage et de commutation selon l'une des revendications précédentes **caractérisée en ce qu'**il est dimensionné pour l'emploi de mélanges à l'eau/gazeux.

7. Dispositif d'accrochage et de commutation selon l'une des revendications précédentes **caractérisée en ce qu'**il est dimensionné pour l'emploi de désinfection et sanitisation au travers des mélanges gazeux et liquides.

8. Dispositif d'accrochage et de commutation selon l'une des revendications précédentes **caractérisée en ce qu'**il est dimensionné pour l'emploi des oxydants gazeux.

9. Dispositif d'accrochage et de commutation selon l'une des revendications précédentes **caractérisée en ce qu'**il est dimensionné pour l'emploi d'ozone.

10. Dispositif d'accrochage et de commutation selon l'une des revendications précédentes **caractérisée en ce qu'**il est dimensionné pour le raccordement d'un dispositif de l'entrée de gaz ou d'un dispositif de l'ozonisation (32,26).

11. Dispositif d'accrochage et de commutation selon l'une des revendications précédentes **caractérisée en ce que** dans le circuit d'apport (30 après 30a) un tuyau de courant peut être disposé pour apporter, mélanger et concentrer les composants gazeux.

12. Dispositif d'accrochage et de commutation selon l'une des revendications précédentes **caractérisée en ce qu'**il contient un dispositif de raccordement (29) pour des récipients appropriés, des composants hydrotechniques diverses (par exemple des filtres) et des clients finals (35), de préférence par moyen des oxydants gazeux (par exemple l'ozone).
